# EUROPEAN PATENT SPECIFICATION

(11) **EP 3 748 653 B1**
(45) Date of publication and mention of the grant of the patent: **17.04.2024**
(21) Application number: 18904173.4
(22) Date of filing: 27.06.2018
(51) Int. Cl.: H02G 5/06

(54) **DIRECT-CURRENT BASIN-TYPE INSULATOR**
GLEICHSTROM BECKENFÖRMIGER ISOLATOR
ISOLANT DE TYPE BASSIN À COURANT CONTINU

(30) Priority: 01.02.2018 CN 201810101639
(43) Date of publication of application: 09.12.2020
(73) Proprietor: Tsinghua University, Beijing 100084 (CN)
(72) Inventor: HE, Jinliang, Beijing 100084 (CN); LI, Chuanyang, Beijing 100084 (CN); ZHANG, Bo, Beijing 100084 (CN); LIN, Chuanjie, Beijing 100084 (CN); HU, Jun, Beijing 100084 (CN); LI, Qi, Beijing 100084 (CN)
(74) Representative: Kaminski Harmann
(86) International application number: PCT/CN2018/093140
(87) International publication number: WO 2019/148758

(56) References cited:
- CN-A- 102 842 394
- CN-A- 106 847 430
- CN-A- 106 847 430
- CN-A- 107 359 028
- DE-A1- 3 634 946
- JP-A- 2016 010 286
- JP-B2- 4 360 586
- Zhang Boya et al.: "Suppression of surface charge accumulation on Al2O3-filled epoxy resin insulator under DC voltage by direct fluorination", AIP Advances Applied Physics, 7 December 2015 (2015-12-07), XP055841335, Retrieved from the Internet: URL:https://aip.scitation.org/doi/pdf/10.1 063/1.4937626 [retrieved on 2021-09-15]

## Description

This application claims the priority to the Chinese Application No. 201810101639.7, filed with the Chinese Patent Office on February 01, 2018 and entitled "Direct-Current Basin-Type Insulator".

### FIELD OF THE INVENTION

This application relates to the technical field of production and manufacturing of electric power technical equipment, and in particular, to a direct-current basin-type insulator.

### BACKGROUND OF THE INVENTION

Gas-insulated transmission lines (GIL for short) include direct current (DC) GIL and alternating current (AC) GIL. Under a direct current voltage, an electric field in a GIL coaxial and cylindrical gas gap is constant, and the electric field distribution depends on the conductivity of an insulating material. The conductivity of the insulating material is further affected, to a great extent, by temperature, humidity, electric field intensity, a voltage-applying duration, and other factors. Meanwhile, during an operation, a polarity reversal occurring under a direct current, transient overvoltage interference, and other factors all greatly affect stability of a GIL insulation system. In addition, under a function of the constant direct current electric field, it is easier for conductive metal particles to migrate and to be attached at a surface of an insulator; and under the direct current, charges may be accumulated at the surface of the insulator, incurring a distortion to an electric field at the surface of the insulator. Both may cause unknown surface flashovers to the insulator under the direct current.

Documents according to prior art are Zhang et al. (AIP Advances 5, 127207, 2015), JP 2016 010286 A, CN 106 847 430 A and DE 36 34 946 A1.

A key problem restricting a direct-current basin-type insulator is that, under a direct current voltage, charges may be accumulated at a surface. The surface charge accumulation may incur a distortion to a portion of an electric field. Particularly, when a switching overvoltage or a lightning overvoltage is superposed on the direct-current basin-type insulator, or during a polarity reversal process, the insulator is more likely to have surface flashovers. Moreover, during an operation process, the surface charge accumulation of the direct-current basin-type insulator is positively correlated with a normal electric field component at the surface. Therefore, a surface charge accumulation degree may be greatly reduced by reducing the normal electric field component. However, reducing the normal electric field component may inevitably affect a horizontal electric field component. A rise in a horizontal electric field may result in a drop to a surface flashover voltage, and therefore, a normal field cannot be reduced without restriction.

Insulation characteristics of an SF6 gas environment under the direct current voltage are significantly differ from those under an alternating current. Controlling the charge accumulation and reducing an amount of surface charges during a long-term operation process of an insulator become key technologies and difficulties in the researching of the direct current GIL insulators.

### SUMMARY OF THE INVENTION

An objective of this application is to resolve the following problem: insulation characteristics of an SF6 gas environment under a direct current voltage are significantly differ from those under an alternating current, and controlling charge accumulation and reducing an amount of surface charges during a long-term operation process of an insulator become key technologies and difficulties in the researching of the direct current GIL insulator.

Regarding this, embodiments of the present invention provide the following technical solutions: a direct-current basin-type insulator, including a central insert, where an epoxy-based aluminium oxide insulation composite member is disposed at an outer side of the central insert, one end of the epoxy-based aluminium oxide insulation composite member is connected to the central insert, and the other end of the epoxy-based aluminium oxide insulation composite member is connected to a flange; and

the central insert includes a first intersection point, the flange includes a second intersection point, and an included angle between a connection line between the first intersection point and the second intersection point and a horizontal plane is not greater than 20°.

An upper end surface of the epoxy-based aluminium oxide insulation composite member includes a first arc surface, a second arc surface, and a third arc surface that are successively and smoothly connected, and a height of the second arc surface is lower than that of the central insert.

Optionally, a first mounting hole is disposed on the flange.

Optionally, a second mounting hole is disposed on the central insert.

Optionally, the second mounting hole includes a screw hole.

Optionally, a shielding ring is further included, and the shielding ring is disposed within the epoxy-based aluminium oxide insulation composite member, and is connected to the flange.

Optionally, the shielding ring is connected to the flange by an insert block.

Optionally, the insert block is welded to the shielding ring, and is connected to the flange by a screw.

Optionally, there are six insert blocks.

The technical solutions provided in the embodiments of the present invention include the following beneficial effects: in this application, by changing a structure of the epoxy-based aluminium oxide insulation composite member, the included angle between the connection line between the first intersection point on the central insert and the second intersection point on the flange and the horizontal plane is enabled to be not greater than 20°, thus significantly reducing taper of the direct-current basin-type insulator. In this way, a normal electric field component is significantly reduced while a horizontal electric field component is not increased, so as to inhibit surface charge accumulation and improve operation stability of the direct-current basin-type insulator under a direct current. Meanwhile, the shielding ring may be disposed within the epoxy-based aluminium oxide insulation composite member, so that the shielding ring is connected to the flange. An electric field at the grounding flange, particularly an electric field nearby a wedge gas gap, may be optimized.

### BRIEF DESCRIPTION OF THE DRAWINGS

To more clearly describe the technical solutions of the embodiment of present invention, the accompanying drawings to be used in the embodiments are briefly illustrated below.
Fig. 1 is a first schematic structural diagram of a direct-current basin-type insulator according to an embodiment of the present invention;
Fig. 2 is a second schematic structural diagram of a direct-current basin-type insulator according to an embodiment of the present invention;
Fig. 3 is a third schematic structural diagram of a direct-current basin-type insulator according to an embodiment of the present invention;
Fig. 4 is a schematic distribution diagram of electric field lines of an alternating-current basin-type insulator at 220 kV according to an embodiment of the present invention;
Fig. 5 is a schematic distribution diagram of electric field lines of a direct-current basin-type insulator at 220 kV according to an embodiment of the present invention;
Fig. 6 is a schematic curve diagram of modulus values of electric fields at surfaces at an initial time when a direct current voltage of 240 kV is applied to an alternating-current basin-type insulator and a direct-current basin-type insulator according to an embodiment of the present invention;
Fig. 7 is a schematic curve diagram of tangential electric field intensity at surfaces at an initial time when a direct current voltage of 240 kV is applied to an alternating-current basin-type insulator and a direct-current basin-type insulator according to an embodiment of the present invention;
Fig. 8 is a schematic curve diagram of normal electric field intensity at surfaces at an initial time when a direct current voltage of 240 kV is applied to an alternating-current basin-type insulator and a direct-current basin-type insulator according to an embodiment of the present invention;
Fig. 9 is a schematic curve diagram of modulus values of electric fields at surfaces when charge accumulation is saturated after 240 kV is applied to an alternating-current basin-type insulator and a direct-current basin-type insulator according to an embodiment of the present invention;
Fig. 10 is a schematic curve diagram of tangential electric field intensity at surfaces when charge accumulation is saturated after 240 kV is applied to an alternating-current basin-type insulator and a direct-current basin-type insulator according to an embodiment of the present invention;
Fig. 11 is a schematic curve diagram of normal electric field intensity at surfaces when charge accumulation is saturated after 240 kV is applied to an alternating-current basin-type insulator and a direct-current basin-type insulator according to an embodiment of the present invention;
Fig. 12 is a schematic curve diagram of modulus values of electric fields at surfaces when a voltage is reversed to 240 kV in a case in which charge accumulation is saturated after -240 kV is applied to an alternating-current basin-type insulator and a direct-current basin-type insulator according to an embodiment of the present invention;
Fig. 13 is a schematic curve diagram of tangential electric field intensity at surfaces when a voltage is reversed to 240 kV in a case in which charge accumulation is saturated after -240 kV is applied to an alternating-current basin-type insulator and a direct-current basin-type insulator according to an embodiment of the present invention;
Fig. 14 is a schematic curve diagram of normal electric field intensity at surfaces when a voltage is reversed to 240 kV in a case in which charge accumulation is saturated after -240 kV is applied to an alternating-current basin-type insulator and a direct-current basin-type insulator according to an embodiment of the present invention;
Fig. 15 is a schematic curve diagram showing that charge density at surfaces varies with time after 240 kV is applied to both side surfaces of an alternating-current basin-type insulator and a direct-current basin-type insulator according to an embodiment of the present invention;
Fig. 16 is a schematic diagram of a platform for a DC withstanding voltage test and a polarity reversal test according to an embodiment of the present invention;
Fig. 17 is a schematic diagram of a voltage applying method for a polarity reversal test according to an embodiment of the present invention;
Fig. 18 shows voltage-withstanding test results for a surface flashover and a polarity reversal of an alternating-current basin-type insulator and a direct-current basin-type insulator according to an embodiment of the present invention;
Fig. 19 is an illustration diagram of simulation assessment standards according to an embodiment of the present invention; and
Fig. 20 is an illustration diagram of test assessment standards according to an embodiment of the present invention.

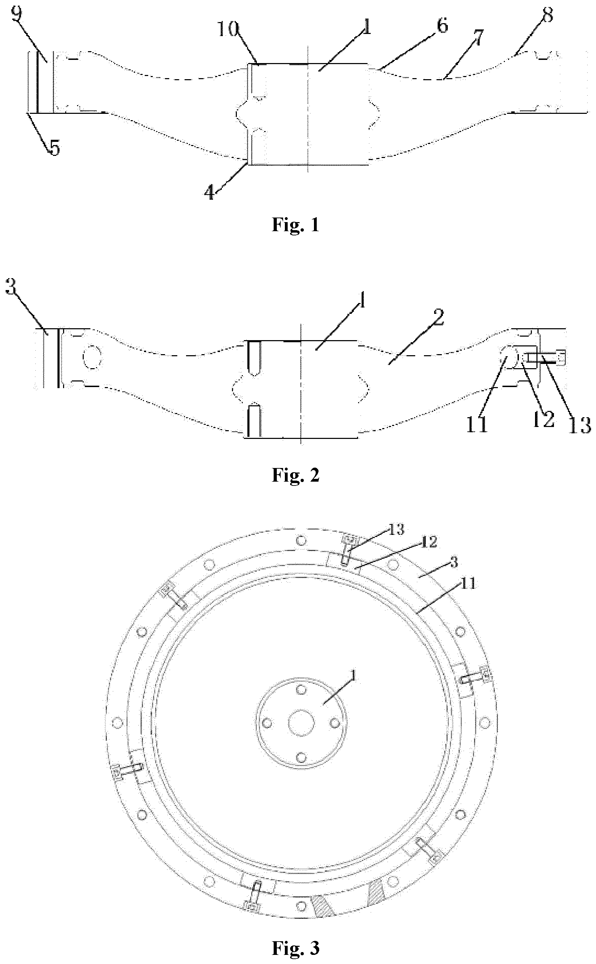

In Figs. 1 to 20, reference numbers are expressed as: 1-central insert, 2-epoxy-based aluminium oxide insulation composite member, 3-flange, 4-first intersection point, 5-second intersection point, 6-first arc surface, 7-second arc surface, 8-third arc surface, 9-first mounting hole, 10-second mounting hole, 11-shielding ring, 12-insert block, 13-screw.

### DETAILED DESCRIPTION OF THE EMBODIMENTS

At present, most giant hydropower projects newly planned in China are located at deep mountain valleys in western plateau regions, and power plants are all distributed underground, and therefore, it is much difficult to transmit electric energy. In another aspect, a conventional overhead transmission line and a cross-linked polyethylene power cable (XPLE) both cannot well satisfy requirements on direct current transmission in a long distance with a large capacity and high reliability in regions with adverse meteorological conditions and complex geographical circumstances, and in regions having special requirements on an electromagnetic interference level and the natural or human environment. An establishment of an ultra-high voltage converter station and connections and arrangements of devices also have similar problems. Given this background, considering ecological and economic factors, to satisfy requirements on development of large-scale power transmission systems and protect land resources and the natural environment, gas-insulated transmission lines (GIL for short) emerge as required. The GIL technology has been applied worldwide since 1970s. Till June 2013, a total length of alternating current GIL with voltage levels of 80-1200 kV that are put into operation worldwide is greater than 750 km. However, these engineering applications are all merely subject to the alternating current transmission field.

Direct current GIL do not significantly differ from the alternating current GIL in mounting and other aspects, and technical difficulties and differences mainly lie in designs for insulation. Under a function of an alternating current voltage, electric field distribution depends on a dielectric constant of an insulating material. Moreover, the alternating current GIL has relatively mature experience in designs, manufacturing, and engineering applications.

From the early 1980s, researchers in China has researched on products similar to the direct current GIL, to be specific, a DC gas insulated switchgear (GIS). Researches are focused on influence of conductive metal particles on the SF6 gas, mechanisms for surface charge accumulation of an insulator, influence of the charge accumulation on insulator flashovers, and other problems. Japan first developed ±500 kV GIS and put the same into use in July 2000. However, an operating voltage is 250 kV In recent years, many domestic research institutes has started to research on surface charge behaviors of a direct current GIL insulator: Hunan University, North China Electric Power University, Xi'an Jiaotong University, and Tsinghua University have made a lot of researches on measurement methods and calculation methods for the surface charges of the insulator; for different types of insulating materials, Tianjin University, Xi'an Jiaotong University, Huazhong University of Science and Technology, Tsinghua University, and Tongii University have made some researches on characteristics of surface charges, and the researches were mainly made for accumulation and attenuation characteristics of surface charges of different materials under a direct current, contrasting with motion characteristics of the surface charges of the different materials; and Technical University of Munich, University of Tokyo, ETH Zurich, and University of Liverpool from foreign countries have made researches on accumulation and dissipation rules of the surface charges of the insulating materials, and put forward relatively systematical simulation methods and conclusions in combination with physical characteristics of different media.

In combination with the embodiments, the technical solutions of this application are further described below in detail with reference to the accompanying drawings.

Referring to Fig. 1, which shows a direct-current basin-type insulator provided in an embodiment of the present invention, including a central insert 1, where an epoxy-based aluminium oxide insulation composite member 2 is disposed at an outer side of the central insert 1, one end of the epoxy-based aluminium oxide insulation composite member 2 is connected to the central insert 1, and the other end of the epoxy-based aluminium oxide insulation composite member 2 is connected to a flange 3; and
the central insert 1 includes a first intersection point 4, the flange 3 includes a second intersection point 5, and an included angle between a connection line between the first intersection point 4 and the second intersection point 5 and a horizontal plane is not greater than 20°.

An upper end surface of the epoxy-based aluminium oxide insulation composite member 2 includes a first arc surface 6, a second arc surface 7, and a third arc surface 8 that are successively and smoothly connected, and a height of the second arc surface 7 is lower than that of the central insert 1. The first arc surface 6 is bent downward to be convex, the second arc surface 7 is bent upward to form a concave part, and the third arc surface 8 is bent downward to form a convex part.

Optionally, a first mounting hole 9 is disposed on the flange 3.

Optionally, a second mounting hole 10 is disposed on the central insert 1.

Optionally, the second mounting hole 10 includes a screw hole.

To manufacture the direct-current basin-type insulator, elliptical-like α-aluminum oxide made in China is selected to be a filler, and the Huntsman epoxy resin used in a low-voltage GIS basin-type insulator made in China is selected to manufacture the direct-current basin-type insulator.
1. The epoxy resin, the aluminum oxide, and a curing agent are weighed according to a mass ratio of 100: 330: 38, and the aluminum oxide that serves as the filler, the epoxy resin, and a mold are put into a blast drying oven at 130°C to be fully preheated. A model number of the epoxy resin herein is CT 5531, and a model number of the curing agent is HY 5533-1.
2. The epoxy resin and the filler are put into a vacuum mixing chamber, and are mixed and stirred after vacuumization. After the epoxy resin and the filler are fully mixed, the curing agent is poured into the chamber to be fully stirred.
3. A mixed liquid is injected into a mold of a vacuum casting chamber through an inlet, and a casted mold is put into the blast drying oven at 130°C to be cured once for 12 hours.
4. The mold is taken out, and a sample is taken out to be put into an incubator to be cured again, where a curing time is 16 hours.
5. A sample of the sample is processed after the sample is taken out and is naturally cooled.

One end of the epoxy-based aluminium oxide insulation composite member 2 is closely bonded to the central insert 1, and the flange 3 is closely bonded to the other end of the epoxy-based aluminium oxide insulation composite member 2.

A key problem restricting the direct-current basin-type insulator is that, under a direct current voltage, charges may be accumulated at a surface. The surface charge accumulation may incur a distortion to a portion of an electric field. Particularly, when a switching overvoltage or a lightning overvoltage is superposed on the direct-current basin-type insulator, or during a polarity reversal process, the insulator is more likely to have surface flashovers. Moreover, during an operation process, the surface charge accumulation of the direct-current basin-type insulator is positively correlated with a normal electric field component at the surface. Therefore, a surface charge accumulation degree may be greatly reduced by reducing the normal electric field component. However, reducing the normal electric field component may inevitably affect a horizontal electric field component. A rise in a horizontal electric field may result in a drop to a surface flashover voltage, and therefore, a normal field cannot be reduced without restriction. Regarding this, in consideration of the horizontal electric field and a normal electric field in a stable DC environment and under a function of the polarity reversal, a novel direct-current basin-type insulator that can be applied to a DC environment is designed in this application. An overall height of the direct-current basin-type insulator becomes smaller, and a height of the epoxy-based aluminium oxide insulation composite member 2 is reduced by increasing a radian of the second arc surface 7.

Referring to Fig. 2 and Fig. 3, which show a direct-current basin-type insulator provided in an embodiment of the present invention, including a central insert 1, where an epoxy-based aluminium oxide insulation composite member 2 is disposed at an outer side of the central insert 1, one end of the epoxy-based aluminium oxide insulation composite member 2 is connected to the central insert 1, and the other end of the epoxy-based aluminium oxide insulation composite member 2 is connected to a flange 3.

The central insert 1 includes a first intersection point 4, the flange 3 includes a second intersection point 5, and an included angle between a connection line between the first intersection point 4 and the second intersection point 5 and a horizontal plane is not greater than 20°.

An upper end surface of the epoxy-based aluminium oxide insulation composite member 2 includes a first arc surface 6, a second arc surface 7, and a third arc surface 8 that are successively and smoothly connected, and a height of the second arc surface 7 is lower than that of the central insert 1. The first arc surface 6 is bent downward to form a convex part, the second arc surface 7 is bent upward to form a concave part, and the third arc surface 8 is bent downward to form a convex part.

Optionally, a first mounting hole 9 is disposed on the flange 3.

Optionally, a second mounting hole 10 is disposed on the central insert 1.

Optionally, the second mounting hole 10 includes a screw hole.

Optionally, a shielding ring 11 is further included, and the shielding ring 11 is disposed within the epoxy-based aluminium oxide insulation composite member 2, and is connected to the flange 3.

Optionally, the shielding ring 11 is connected to the flange 3 by an insert block 12.

Optionally, the insert block 12 is welded to the shielding ring 11, and is connected to the flange 3 by a screw 13. A welding seam between the insert block 12 and the shielding ring 11 is polished to ensure surface smoothness.

Optionally, there are six insert blocks 12.

The shielding ring 11 is made of a spring. The spring has a wire diameter of 1 mm, and is winded into an ellipse. A radius of a major axis of the spring is 10 mm, a radius of a minor axis is 8 mm, and a thread pitch of the spring is 2.5 mm.

The six insert blocks 12 are evenly arranged. One end of the insert block 12 is welded to the shielding ring 11, and the other end of the insert block 12 is connected to the flange 3 by the screw 13. Certainly, there may be a plurality of manners for connecting the insert block 12 and the flange 3, provided that the two are connected.

Electrical and mechanical simulation analyses are performed on the direct-current basin-type insulator.

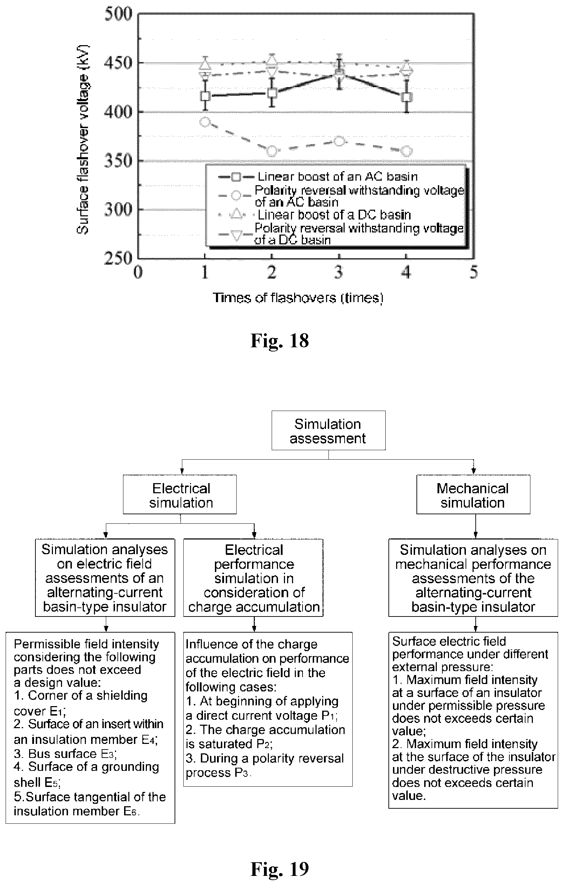

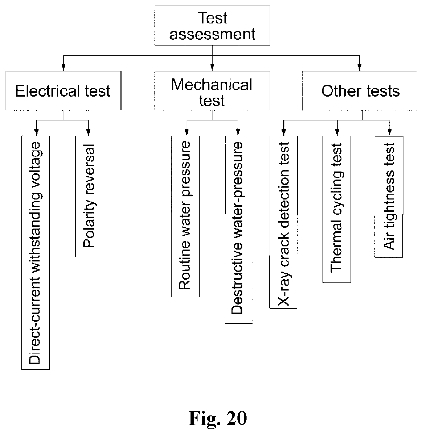

Designs are based on the simulation assessment standards provided in Fig. 19 and the test assessment standards provided in Fig. 20.

### Electrical simulation

### 1. Simulation analyses based on electric field assessments of an existing alternating-current basin-type insulator

Field intensity design standards for the alternating-current basin-type insulator

| Design Standards | Notes |
|---|---|
| Permissible field intensity of a shielding cover in SF₆: E₁<24 kV/mm | Under a lightning surge voltage, peak value |
| Maximum allowable working field intensity within an insert of an insulation member: E₄<3 kV/mm | Under a rated phase voltage, effective value |
| Bus surface: E₃<E₁- 3 | Under a lightning surge voltage, peak value |
| Maximum permissible field intensity at a surface of a grounding shell: E₅<14 kV/mm | Under a lightning surge voltage, peak value |
| Maximum tangential permissible field intensity at a surface of an insulator: E₆<0.5×E1 | Under a lightning surge voltage, peak value |

Field intensity calculations are performed on the direct-current basin-type insulator with reference to the foregoing design standards, and the following results are obtained:
1) The permissible field intensity of the shielding cover in SF₆: E1=22.46 kV/mm;
2) The maximum allowable working field intensity within the insert of the insulation member: E4=2.45 kV/mm;
3) The bus surface: E3=19.71 kV/mm;
4) The maximum permissible field intensity at the surface of the grounding shell: E5=11.21 kV/mm;
5) The maximum tangential permissible field intensity at the surface of the insulator: E₆=11.12 kV/mm.

The foregoing results indicate that field intensity at all positions of the direct-current basin-type insulator and in an operating environment of the direct-current basin-type insulator satisfies simulation design requirements of the alternating current basin-type insulator at 220 kV

### 2. Simulation analyses considering charge accumulation under a direct current

Different from a feature that an electric field under a function of an alternating current field is distributed according to a dielectric constant, the electric field under a function of a direct current field is related to conductivity, and a charge accumulation in the direct current field may affect electric field distribution. Therefore, influence of the charge accumulation on the electric field distribution needs to be considered in a design process. On the basis of a shape of the alternating-current basin-type insulator, a normal electric field component is reduced by changing a longitudinal height of the alternating-current basin-type insulator. At the same time, a shape that satisfies requirements is designed for the direct-current basin-type insulator in consideration of a constraint condition that with a same external excitation source, a horizontal electric field component of the direct-current basin-type insulator is superior to a horizontal electric field component of the alternating-current basin-type insulator under 220 kV

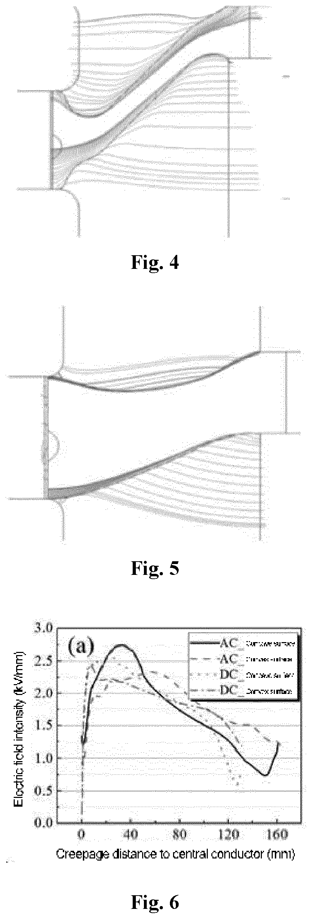

It may be learned from Fig. 4 and Fig. 5 that a creepage distance of the alternating-current basin-type insulator is longer than that of the direct-current basin-type insulator. However, electric field lines that pass through a surface exist in most of a surface region of the alternating-current basin-type insulator. In other words, the normal electric field component of the alternating-current basin-type insulator has a relatively large ratio. However, for the direct-current basin-type insulator whose shape is improved, the normal electric field component rarely exists in most of a surface region.

It may be learned from Figs. 6 to 8 that at an initial stage of applying a voltage, there are some similarities between modulus value distribution of electric field intensity of the direct-current basin-type insulator and the alternating-current basin-type insulator. Details are described below.
1) Electric field intensity nearby a central conductor is relatively high, and amplitude of the electric field intensity is decreased as a distance to the central conductor is increased.
2) A modulus value of an electric field at a concave surface is slightly greater than that of an electric field at a convex surface. A maximum value that is approximately 2.75 kV/mm appears at a concave surface of the alternating-current basin-type insulator, while a maximum value at a concave surface of the direct-current basin-type insulator may also reach 2.5 kV/mm.

Tangential field intensity distribution at a surface also represents a law similar to that of the modulus values of the electric field. Moreover, a difference between maximum electric field components at the convex surface and the concave surface of the alternating-current basin-type insulator is obviously increased, and the maximum value tends to deviate rightwards. However, a difference between electric field components at the convex surface and the concave surface of the direct-current basin-type insulator is not great. Analyzing from the normal electric field component, the two basin-type insulators are obviously different, and have the following laws.
1. Except that normal electric field components nearby the central conductor and the grounding shell are slightly great, normal components at a middle portion are distributed in a relatively gentle manner.
2. The normal electric field component of the alternating-current basin-type insulator is always higher than the normal electric field component of the direct-current basin-type insulator, where a maximum value appears nearby a high-voltage conductor. Maximum values at the concave surface and the convex surface of the alternating-current basin-type insulator can reach 1.9 kV/mm and 1.75 kV/mm. However, maximum values of normal components at the concave surface and the convex surface of the direct-current basin-type insulator are all lower than 0.75 kV/mm.

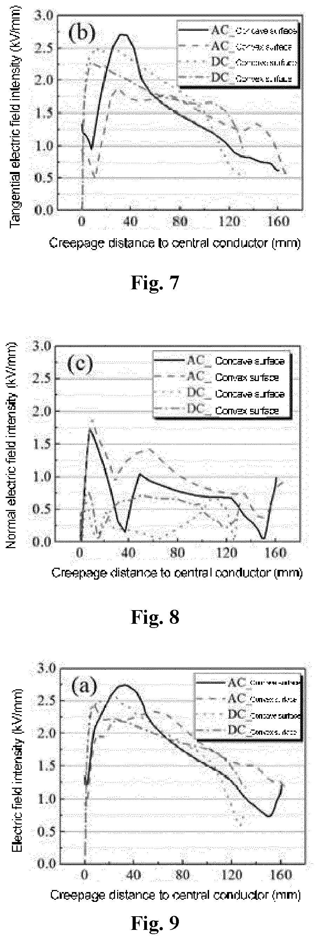

It may be learned from Figs. 9 to 11 that after the charge accumulation is saturated, modulus values of electric fields of the direct-current basin-type insulator and the alternating-current basin-type insulator do not differ greatly, and have the following features.
1. The electric field intensity nearby the central conductor is relatively high, and is decreased as the distance to the central conductor is increased. In addition, due to injection of charges having a same polarity at a current-carrying conductor, a maximum modulus value of the electric field tends to shift towards the grounding flange.
2. The modulus value of the electric field at the concave surface is slightly greater than that of the electric field at the convex surface. The maximum value that is approximately 2.75 kV/mm appears at the convex surface of the alternating-current basin-type insulator, while the maximum modulus value of the electric field of the direct-current basin-type insulator appears at the concave surface, and is not greater than 2.5 kV/mm.

The tangential field intensity distribution at a surface also represents a law similar to the law 1 of the modulus values of the electric field. However, a difference is that the maximum electric field components at the convex surface and the concave surface of the alternating-current basin-type insulator differ obviously, while the direct-current basin-type insulator does not significantly vary. Analyzing from the normal electric field component, the two basin-type insulators are obviously different, and have the following laws.
1. For the two basin-type insulators, except that the normal electric field components nearby the central conductor and the grounding shell are slightly great, the normal components at the middle portion are distributed in a relatively gentle manner.
2. The normal electric field component of the alternating-current basin-type insulator is always higher than the normal electric field component of the direct-current basin-type insulator, where the maximum value appears nearby the high-voltage conductor. The maximum values at the concave surface and the convex surface of the alternating-current basin-type insulator can reach 1.9 kV/mm and 1.75 kV/mm. However, the maximum values of the normal components at the concave surface and the convex surface of the direct-current basin-type insulator are all lower than 0.75 kV/mm.

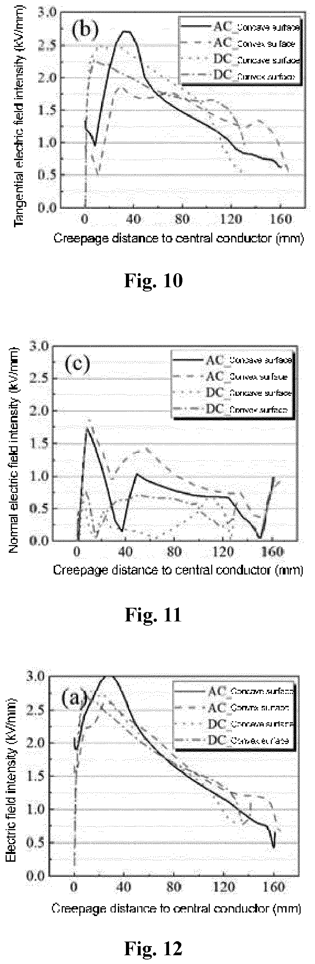

It may be learned from Figs. 12 to 14 that: 1. the electric field intensity nearby the central conductor is increased as compared with values at beginning of the direct current voltage and when the charge accumulation is saturated, and is decreased as the distance to the central conductor is increased;

2. the modulus value of the electric field at the concave surface is slightly greater than that of the electric field at the convex surface, and the maximum value appears at the convex surface of the alternating-current basin-type insulator, and is greater than 3 kV/mm.

The tangential field intensity distribution at a surface also represents a law similar to the law 1 of the modulus values of the electric field. However, a difference is that the maximum electric field components at the convex surface and the concave surface of the alternating-current basin-type insulator differ obviously, while the direct-current basin-type insulator does not significantly vary. Analyzing from the normal electric field component, the two basin-type insulators vary obviously, and have the following laws.
1. Except that the normal electric field components nearby the central conductor and the grounding shell are slightly great, the normal components at the middle portion are distributed in a relatively gentle manner.
2. The normal electric field component of the alternating-current basin-type insulator is always higher than the normal electric field component of the direct-current basin-type insulator, where the maximum value appears nearby the high-voltage conductor. The maximum values at the concave surface and the convex surface of the alternating-current basin-type insulator are about 2 kV/mm. However, the maximum values of the normal components at the concave surface and the convex surface of the direct-current basin-type insulator are all lower than 0.75 kV/mm.

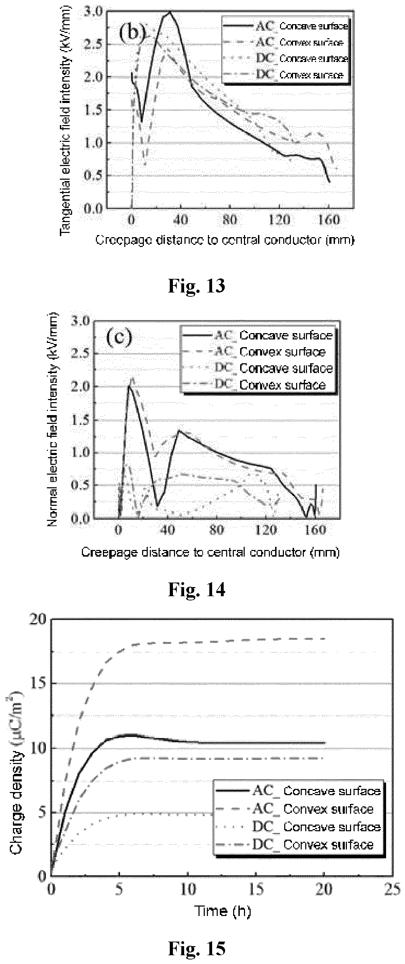

It may be learned from Fig. 15 that the charge accumulation of the two basin-type insulators takes about 10 hours to be saturated. After the charge accumulation is stable, due to a shape improvement, regarding the charge accumulation, the direct-current basin-type insulator is obviously superior to the alternating-current basin-type insulator. Surface charge densities at the concave surface and the convex surface of the direct-current basin-type insulator both are lower than 10 µC/m², where the charge density at the concave surface is even lower than 5 µC/m². However, surface charge densities at the concave surface and the convex surface of the alternating current-basin-type insulator both are higher than 10 µC/m², where the charge density at the convex surface is even higher than 18 µC/m2.

### Mechanical simulation

On the basis of an existing mechanical simulation analysis method of the alternating-current basin-type insulator at 220 kV, standards for mechanical simulation analyses of the direct-current basin-type insulator are set as follows.
1. Routine mechanical simulation: pressure of 1.5 Mpa is applied to a concave surface and a convex surface, to ensure that pressure at a position where an insulating material is adhered to an insert is not higher than 20 Mpa, and pressure at other positions is not higher than 60 Mpa.
2. Fracture mechanical simulation: pressure of 2.25 Mpa is applied to a concave surface and a convex surface, to ensure that pressure at a position where an insulating material is bonded to an insert is not higher than 35 Mpa, and pressure at other positions is not higher than 90 Mpa.

When an acting force of 1.5 Mpa is applied to a concave surface of the direct-current basin-type insulator, maximum stress at a bonding position can reach 14.66 Mpa, while a maximum pressure value, being 35.02 Mpa, at other positions appears at a position at which the grounding flange is connected to the insulation member, where the two values both are lower than a maximum stress value under permissible pressure. When an acting force of 1.5 Mpa is applied to a convex surface of the direct-current basin-type insulator, maximum stress at a bonding position can reach 19.35 Mpa, and a maximum pressure value at other positions is also the value of 19.35 Mpa at the bonding position. When an acting force of 2.25 MP is applied to the concave surface of the direct-current basin-type insulator, maximum stress at a bonding position can reach 21.99 Mpa, while a maximum pressure value, being 52.54 Mpa, at other positions appears at the position at which the grounding flange is connected to the insulation member, where the two values both are lower than a maximum stress value under permissible pressure. When an acting force of 2.25 Mpa is applied to the convex surface of the direct-current basin-type insulator, maximum stress at a bonding position can reach 23.09 Mpa, and a maximum pressure value at other positions is also the value of 23.09 Mpa at the bonding position. The foregoing analyses indicate that mechanical performance of the direct-current basin-type insulator designed in this specification can satisfy requirements of the alternating-current basin-type insulator at 220 kV In other words, by replacing the alternating-current basin-type insulator at 220 kV with the direct-current basin-type insulator, the mechanical performance of the direct-current basin-type insulator can satisfy requirements on operational reliability.

### Routine test settings

Routine tests use ex-factory test methods of the alternating-current basin-type insulator at 220 kV that is made in China, including: an X-ray crack detection test, water pressure and air tightness tests, and a thermal cycling test. Meanwhile, DC operating performance is assessed, to formulate a DC withstanding voltage test and a polarity reversal test. To be specific, superiority in DC performance of the direct-current basin-type insulator is verified by performing the DC withstanding voltage test and the polarity reversal test on the alternating-current basin-type insulator at 220 kV and the direct-current basin-type insulator.

### X-ray crack detection test

An objective of the X-ray crack detection test is to observe whether there is an air hole or a crack in a sample by means of projecting the sample with X-rays, and to observe whether the insulating material is closely bonded at a bonding position of an insert. During a test process, the sample is observed by an X-ray crack detector, where a flaw allowable within a range of a projection area of 10×10 cm is Φ=1.0-1.5 mm, and a quantity of flaws having depths lower than 0.5 mm is not greater than four. Figs. 6 to 11 show the direct-current basin-type insulator that is being delivered into the crack detector to be performed with the X-ray crack detection test.

### Water pressure and air tightness tests

An assessment method of a mechanical performance test of an industrial basin-type insulator is implemented through the water pressure and air tightness tests. During the water pressure test, a routine test at 1.5 Mpa is performed on the to-be-assessed basin-type insulator, and a pressure-withstanding time is 5 minutes. The checked basin-type insulator needs to be able to withstand water pressure of 2.25 Mpa for 1 minute. The assessment is passed if no local water leakage, no surface crack, and no insulator burst occurs during the pressure-withstanding process. The air tightness test requires that a container for sealing the basin-type insulator is at 20°C, and a gas leaking rate under gauge pressure of 0.8 Mpa is smaller than 1 × 10⁻⁸ cc/s.

### Thermal cycling test

The thermal cycling test is mainly for assessing an internal stress-relieving capability of the basin-type insulator under a function of a thermal cycle, and a capability for a physical property to withstand the thermal cycle. Figs. 6 to 14 are pictures when the basin-type insulator during a test is placed into a high-low temperature alternating test box, and a temperature is controlled to be programmed and adjustable in a range from -70°C to 150°C.

### Assessment manners of the thermal cycling test are:

1. Placing the basin-type insulator into the high-low temperature alternating test box, and adjusting the temperature to be -30±5°C, where a time duration is 4 hours;
2. Putting the insulator back to a room temperature for 2 hours;
3. Placing the basin-type insulator into the high-low temperature alternating test box, and adjusting the temperature to be 110±5°C;
4. Repeating steps 1 to 3 for 10 times in total; and
5. Taking out the basin-type insulator on which the test is finished, where the test is passed if it is observed that there is no crack or other damages at a surface of and within the basin-type insulator.

### DC withstanding voltage test and polarity reversal test

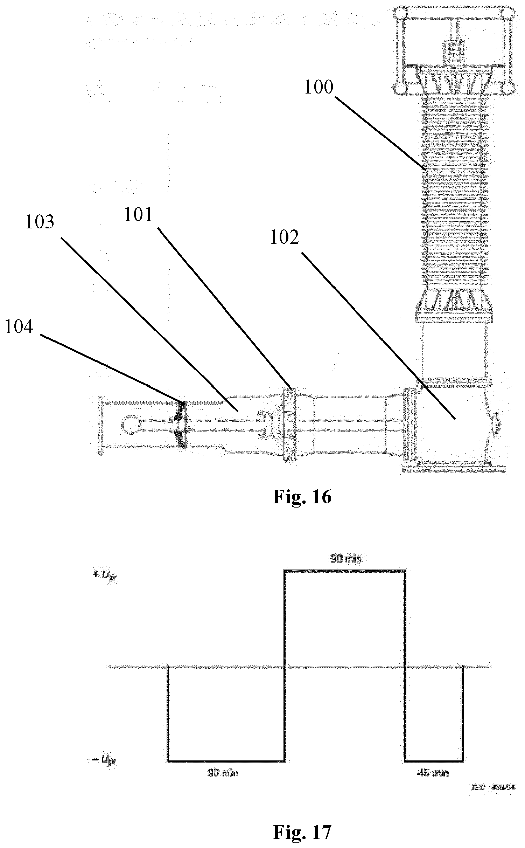

Refer to Fig. 16, the DC withstanding voltage test and the polarity reversal test are used to assess operating performance of the basin-type insulator in a DC environment. A test platform uses an alternating current sleeve 100 of 550 kV, and is connected to the basin-type insulator 101 under 550 kV by using a tee adapter 102 at a bottom portion. Another end of the basin-type insulator 101 is connected with a variable-diameter chamber 103 of which 550 kV is converted into 220 kV The basin-type insulator for DC 104 withstanding voltage is connected to another end of the chamber 103, and is connected to a high-voltage end by a matching central conductor. Another end of the to-be-tested insulator is connected to mushroom shielding ball by a guide rod. A pressure-resistant platform and a schematic diagram of a sample are shown in Figs. 6 to 15. During a test process, vacuumization of the chamber takes 1 hour; SF6 gas is filled into till the gauge pressure is 0.4 Mpa, that is, absolute pressure is 0.5 Mpa; a direct current voltage is applied by using a DC boost transformer of ±600 kV; a boost rate is 20 kV/s; and an environment temperature is 0-5°C.

Referring to Fig. 17, because there is no assessment standards for the direct-current basin-type insulator, for a DC withstanding voltage standard, reference may be made to a DC withstanding voltage standard for a wall tube used by a direct current system of ±800 kV A withstand voltage is 1.53 times of a rated operating voltage, and a withstand time is 2 hours. Therefore, it is selected that an assessment value of the DC withstanding voltage is that UT=1.53UN = 245kV, and pressure-withstanding duration is 2 hours.

For standards of the polarity reversal test, reference may be made to requirements on polarity reversal of a direct current sleeve according to the European standard EN 62199. Voltage conversion of the polarity reversal test is shown in Figs. 6 to 16. In addition, an existing platform cannot satisfy a requirement that time of a polarity reversal process needs to be as short as possible and be less than 2 minutes. Therefore, an amplitude of an applied voltage is correspondingly increased, to improve strictness of assessments and tests. A value of the applied voltage satisfies that 1.5 UN=240 kV.

Contrast tests with respect to the alternating- current basin-type insulator at 220 kV

To compare performance under a direct current of the direct-current basin-type insulator and the alternating-current basin-type insulator at 220 kV, the performance is assessed according to a DC linear boost and a polarity reversal voltage-withstanding test. During a linear boost assessment, vacuumization is performed on the chamber for 1 hour, after the SF6 is filled into till the gauge pressure is 0.3 Mpa, that is, the absolute pressure is 0.4 Mpa, the voltage is boosted at a rate of -20 kV/s till a surface flashover occurs, a surface flashover voltage is recorded, and a same insulator is continuously performed with four pressurized tests, a voltage recovery takes less than 2 minutes. A pressure-withstanding method and a test procedure of the polarity reversal are as follows.
1. Vacuumization is performed to a test chamber for 1 hour, and SF6 is filled into till the gauge pressure is 0.3 Mpa, that is, the absolute pressure is 0.4 Mpa.
2. The voltage is boosted to -300 kV at a rate of -20 kV/s; after the voltage is kept for 90 minutes, a polarity of a direct current generator is reversed to boost the voltage at a rate of 20 kV/s till a surface flashover occurs; and a voltage when the surface flashover occurs is recorded.

Through the X-ray crack detection test, it may be learned that internal materials of the direct-current basin-type insulator are evenly mixed, without a local region where the materials are densely gathered; and materials surrounding the inset are closely attached, without an obvious stratification or bright line. This indicates that a size change of the sample and a change of an internal shielding member (grading ring) do not affect casting and curing processes of a direct current insulator. Success of the thermal cycling test indicates that physical properties of the direct-current basin-type insulator are stable when different external temperatures change alternatively, indicating that the direct-current basin-type insulator can resist additional stresses generated because thermal properties of different materials are different due to changes in external temperatures and in the conductor temperature. Successes of the water pressure test and the air tightness test indicate that mechanical performance and sealing performance of the insulator can satisfy requirements of an industrialized GIS or the GIL on a sealed insulation member.

### Names and results of routine tests

| Test name | Test result |
|---|---|
| X-ray crack detection | Pass |
| Thermal cycling | Pass |
| Water pressure (routine/crack) | Pass/3.9 MPa |
| Air tightness | Pass |

By analyzing the foregoing test results, it may be learned that the direct-current basin-type insulator can pass all routine tests for the alternating-current basin-type insulator at 220 kV This indicates that the direct-current basin-type insulator can have potential probabilities to equivalently replace the existing alternating-current basin-type insulator at 220 kV and be applied to the GIS or the GIL.

### Names and results of DC tests

| Test name | Test result |
|---|---|
| DC voltage withstand | Pass |
| Polarity reversal | Pass |

The results display that the DC withstanding voltage test and the polarity reversal test can be successfully passed.

It may be learned from Fig. 18 that under the withstanding voltage test for the polarity reversal, surface flashover voltages of both the alternating-current basin-type insulator and the direct-current basin-type insulator are lower than the surface flashover voltage with the DC linear boost. The surface flashover voltage after the polarity reversal of the alternating-current basin-type insulator drops relatively more greatly, and may drop from the original 420-440 kV to be lower than 360 kV The surface flashover voltage with the linear boost of the direct-current basin-type insulator is slightly greater than that of the alternating-current basin-type insulator, and surface flashover voltages at different voltage withstanding times are more stable than the alternating-current basin-type insulator. A surface flashover voltage value after the polarity reversal is slightly smaller than a surface flashover voltage value with the DC linear boost. A difference between withstand voltages of the direct-current basin-type insulator and the alternating-current basin-type insulator is smaller than 30 kV.

In this application, by changing the structure of the epoxy-based aluminium oxide insulation composite member 2, the included angle between the connection line between the first intersection point 4 on the central insert 1 and the second intersection point 5 on the flange 3 and the horizontal plane is not greater than 20°, which significantly reduces taper of the direct-current basin-type insulator. In this way, the normal electric field component is significantly reduced while the horizontal electric field component is not increased, so as to inhibit the surface charge accumulation and improve operation stability of the direct-current basin-type insulator under a direct current. Meanwhile, the shielding ring 11 may be disposed within the epoxy-based aluminium oxide insulation composite member 2, so that the shielding ring 11 is connected to the flange 3. An electric field at the grounding flange 3, particularly an electric field nearby a wedge gas gap, may be optimized.

The direct-current basin-type insulator may be applied to direct current systems at different voltage levels by means of equal-ratio zooming in. In addition, all direct-current basin-type insulators that are manufactured by using different filling materials and design ideas and are applied to the DC environment fall within the protection scope of this patent.

Merely specific implementations of the embodiments of the present invention are described above, so that a person skilled in the art can understand or implement the present invention.

It should be understood that this application is not limited to the content that is described above and is shown in the figures, and various modifications and changes can be made thereto, without departing from the scope thereof. The scope of this application is limited by the appended claims.

## Claims

1. A direct-current basin-type insulator, comprising a central insert (1), wherein an epoxy-based aluminium oxide insulation composite member (2) is disposed at an outer side of the central insert (1), one end of the epoxy-based aluminium oxide insulation composite member (2) is connected to the central insert (1), and the other end of the epoxy-based aluminium oxide insulation composite member (2) is connected to a flange (3); and
the central insert (1) comprises a first intersection point (4), the flange (3) comprises a second intersection point (5), and an included angle between a connection line between the first intersection point (4) and the second intersection point (5) and a horizontal plane is not greater than 20°, **characterized in that** an upper end surface of the epoxy-based aluminium oxide insulation composite member (2) comprises a first arc surface (6), a second arc surface (7), and a third arc surface (8) that are successively and smoothly connected, and a height of the second arc surface (7) is lower than that of the central insert (1); wherein the first arc surface (6) is bent downward to be convex, the second arc surface (7) is bent upward to form a concave part, and the third arc surface (8) is bent downward to form a convex part.

2. The direct-current basin-type insulator according to claim 1, wherein a first mounting hole (9) is disposed on the flange (3).

3. The direct-current basin-type insulator according to claim 2, wherein a second mounting hole (10) is disposed on the central insert (1).

4. The direct-current basin-type insulator according to claim 3, wherein the second mounting hole (10) comprises a screw hole.

5. The direct-current basin-type insulator according to any one of claims 1 to 4, further comprising a shielding ring (11), wherein the shielding ring (11) is disposed within the epoxy-based aluminium oxide insulation composite member (2), and is connected to the flange (3).

6. The direct-current basin-type insulator according to claim 5, wherein the shielding ring (11) is connected to the flange (3) by an insert block (12).

7. The direct-current basin-type insulator according to claim 6, wherein the insert block (12) is welded to the shielding ring (11), and is connected to the flange (3) by using a screw (13).

8. The direct-current basin-type insulator according to claim 7, wherein there are six insert blocks (12).

## Patentansprüche

1. Schalenförmiger Gleichstromisolator, umfassend einen zentralen Einsatz (1), wobei ein Aluminiumoxidisolationsverbundelement (2) auf Epoxidbasis an einer Außenseite des zentralen Einsatzes (1) angeordnet ist, ein Ende des Aluminiumoxidisolationsverbundelements (2) auf Epoxidbasis mit dem zentralen Einsatz (1) verbunden ist und das andere Ende des Aluminiumoxidisolationsverbundelements (2) auf Epoxidbasis mit einem Flansch (3) verbunden ist; und
der zentrale Einsatz (1) einen ersten Schnittpunkt (4) umfasst, der Flansch (3) einen zweiten Schnittpunkt (5) umfasst und ein eingeschlossener Winkel zwischen einer Verbindungslinie zwischen dem ersten Schnittpunkt (4) und dem zweiten Schnittpunkt (5) und einer horizontalen Ebene nicht größer als 20° ist, **dadurch gekennzeichnet, dass** eine obere Endfläche des Aluminiumoxidisolationsverbundelements (2) auf Epoxidbasis eine erste Bogenfläche (6), eine zweite Bogenfläche (7) und eine dritte Bogenfläche (8) umfasst, die nacheinander und gleichmäßig verbunden sind, und eine Höhe der zweiten Bogenfläche (7) geringer als die des zentralen Einsatzes (1) ist; wobei die erste Bogenfläche (6) nach unten gebogen ist, um konvex zu sein, die zweite Bogenfläche (7) nach oben gebogen ist, um einen konkaven Teil auszubilden, und die dritte Bogenfläche (8) nach unten gebogen ist, um einen konvexen Teil auszubilden.

2. Schalenförmiger Gleichstromisolator nach Anspruch 1, wobei ein erstes Befestigungsloch (9) an dem Flansch (3) angeordnet ist.

3. Schalenförmiger Gleichstromisolator nach Anspruch 2, wobei ein zweites Befestigungsloch (10) an dem zentralen Einsatz (1) angeordnet ist.

4. Schalenförmiger Gleichstromisolator nach Anspruch 3, wobei das zweite Befestigungsloch (10) ein Schraubloch umfasst.

5. Schalenförmiger Gleichstromisolator nach einem der Ansprüche 1 bis 4, ferner umfassend einen Abschirmring (11), wobei der Abschirmring (11) in dem Aluminiumoxidisolationsverbundelement (2) auf Epoxidbasis angeordnet ist und mit dem Flansch (3) verbunden ist.

6. Schalenförmiger Gleichstromisolator nach Anspruch 5, wobei der Abschirmring (11) durch einen Einsatzblock (12) mit dem Flansch (3) verbunden ist.

7. Schalenförmiger Gleichstromisolator nach Anspruch 6, wobei der Einsatzblock (12) an den Abschirmring (11) geschweißt ist und unter Verwendung einer Schraube (13) mit dem Flansch (3) verbunden ist.

8. Schalenförmiger Gleichstromisolator nach Anspruch 7, wobei es sechs Einsatzblöcke (12) gibt.

## Revendications

1. Isolateur de type cuvette à courant continu, comprenant un insert central (1), dans lequel un organe composite d'isolation en oxyde d'aluminium à base d'époxy (2) est disposé au niveau d'un côté externe de l'insert central (1), une extrémité de l'organe composite d'isolation en oxyde d'aluminium à base d'époxy (2) est raccordée à l'insert central (1), et l'autre extrémité de l'organe composite d'isolation en oxyde d'aluminium à base d'époxy (2) est raccordée à une bride (3) ; et
l'insert central (1) comprend un premier point d'intersection (4), la bride (3) comprend un second point d'intersection (5), et un angle inclus entre une ligne de raccordement entre le premier point d'intersection (4) et le second point d'intersection (5) et un plan horizontal n'est pas supérieur à 20°, **caractérisé en ce qu'**une surface d'extrémité supérieure de l'organe composite d'isolation en oxyde d'aluminium à base d'époxy (2) comprend une première surface en arc (6), une deuxième surface en arc (7) et une troisième surface d'arc (8) qui sont raccordées successivement et sans à-coup, et une hauteur de la deuxième surface d'arc (7) est inférieure à celle de l'insert central (1) ; dans lequel la première surface en arc (6) est courbée vers le bas pour être convexe, la deuxième surface en arc (7) est courbée vers le haut pour former une partie concave, et la troisième surface en arc (8) est courbée vers le bas pour former une partie convexe.

2. Isolateur de type cuvette à courant continu selon la revendication 1, dans lequel un premier trou de montage (9) est disposé sur la bride (3).

3. Isolateur de type cuvette à courant continu selon la revendication 2, dans lequel un second trou de montage (10) est disposé sur l'insert central (1).

4. Isolateur de type cuvette à courant continu selon la revendication 3, dans lequel le second trou de montage (10) comprend un trou de vis.

5. Isolateur de type cuvette à courant continu selon l'une quelconque des revendications 1 à 4, comprenant en outre une bague de protection (11), dans lequel la bague de protection (11) est disposée au sein de l'organe composite d'isolation en oxyde d'aluminium à base d'époxy (2), et est raccordée à la bride (3).

6. Isolateur de type cuvette à courant continu selon la revendication 5, dans lequel la bague de protection (11) est raccordée à la bride (3) par un bloc d'insert (12).

7. Isolateur de type cuvette à courant continu selon la revendication 6, dans lequel le bloc d'insert (12) est soudé à la bague de protection (11), et est raccordé à la bride (3) à l'aide d'une vis (13).

8. Isolateur de type cuvette à courant continu selon la revendication 7, dans lequel les blocs d'insert (12) sont au nombre de six.
